# EUROPEAN PATENT APPLICATION

(11) **EP 2 653 252 A1**
(43) Date of publication of application: **23.10.2013**
(21) Application number: 13164266.2
(22) Date of filing: 18.04.2013
(51) Int. Cl.: B23D 47/12

(54) **Sawing unit for wood**

(30) Priority: 18.04.2012 IT MO20120099
(71) Applicant: SCM Group S.p.A., 47900 Rimini (IT)
(72) Inventor: Selvaggi, Simona, 47922 Rimini (RN) (IT)
(74) Representative: Villanova, Massimo

(57) **Abstract**

A sawing unit (5) for machining wooden workpieces or workpieces made of a material equivalent to wood, in which the height of a circular saw blade (4) is variable, the circular saw blade (4) being carried by an adjusting carriage (10); an endless flexible member (13) is guided around a blade shaft (11) carrying the saw blade (4) and around a drive motor shaft (9); the movements of a rocker (15) that carries a deflecting element (14) that keeps the flexible member (13) tensioned, are correlated with the movements of the adjusting carriage (10).

## Description

### Background of the invention

The invention relates to a sawing unit, in particular for machining wooden workpieces or workpieces made of a material that is similar to wood, and a (circular) saw apparatus comprising the aforesaid sawing unit.

Specifically, but not exclusively, the sawing unit and the corresponding saw apparatus can be usefully employed in a machine for sectioning panels.

In particular, reference is made to a sawing unit having a blade the height of which is variable, in particular for enabling the blade to disappear below the horizontal supporting plane of the workpiece during the return stroke along the cutting axis and/or for adjusting the protrusion of the blade above the supporting table.

Circular saws for wood are also known that have a circular blade that can be raised and lowered and which is connected to a drive motor by a blade-height varying device, in such a manner as to prevent or limit the movements of raised masses, in particular the mass of the drive motor.

DE 19532726 shows a circular saw with a carriage that is horizontally movable below the workpiece-holding table and a vertically movable blade-holding slide, in which a motor arranged on the carriage drives the blade by a continuous drive belt guided by a group of pulleys comprising a pulley that is coaxial to the drive shaft, a pulley that is coaxial to the blade shaft, a pulley mounted on the lower end of the blade-holding slide and two auxiliary pulleys arranged on the carriage on top of one another; the belt branches coming from the drive shaft are guided by the auxiliary pulleys arranged on the carriage; the belt branch that leaves the upper auxiliary pulley is guided on the pulley that is coaxial to the blade and the belt branch that leaves the lower auxiliary pulley is guided on the pulley mounted at the bottom on the slide.

EP 1815930 shows a circular saw for wood in which the protrusion of the saw, above the table on which the workpiece is supported, can be varied by a double rocker device, in which a lower rocker is connected to the drive shaft, an upper rocker is connected to the shaft of the saw and the two rockers are connected together on a movable axis.

EP 1990114 shows a circular saw carried by a vertically movable carriage on a base; the saw is driven, via a dual belt transmission, by a motor arranged on a rocker hinged on the carriage; the motor is supported by an arm hinged on one side to the rocker and on the other side to the base; simultaneously with the vertical movement of the carriage the motor performs a movement comprising about two linear movements.

EP 1992438 shows a circular saw with a blade of adjustable height arranged on an adjusting carriage that is movable with respect to the axis of the drive shaft, wherein a drive belt is guided around the drive shaft, around the blade shaft, around a first transmission pulley in a fixed position compared with the axis of the drive shaft and around a second transmission pulley that is movable with the axis of the blade shaft to compensate for the variation of the distance between the drive shaft and the blade shaft.

### Summary of the invention

One object of the invention is to make a sawing unit having a blade with a variable height.

One advantage is to permit a height-varying movement in which the blade moves in relation to the drive motor of the blade.

One advantage is to enable the height of the blade to be varied, limiting movements of great mass, in particular of the drive motor.

One advantage is to enable the height of the blade to be varied without varying the height of the motor.

One advantage is not to burden the blade-holding movable adjusting carriage with the weight of the motor.

One advantage is to compensate effectively and reliably for the variation in the distance between the axis of the blade and the axis of the drive motor.

One advantage is to simplify the control of the height of the blade, and to improve the quality and precision of the workpieces machined by the sawing unit.

One advantage is to provide a constructionally simple and cheap sawing unit.

One advantage is to rotate the blade by a motor of relatively large size without problems of interference with other elements.

One object of the invention is to provide a circular saw apparatus having the aforesaid sawing unit.

Such objects and advantages and still others are all achieved by the saw unit and apparatus according to any one of the claims set out below.

In one example, a sawing unit comprises an adjusting carriage, a blade (for example a circular saw blade), the height of which can be varied through the effect of the movements of the adjusting carriage, a blade shaft that carries the blade, a drive motor shaft, transmission means for transmitting motion from the drive shaft to the blade shaft, in turn comprising at least one endless flexible member, a deflecting element that keeps the flexible member tensioned, a rocker that carries the deflecting element, and in which the sawing unit further comprises controlling means for controlling the movements of the rocker as a function of the movements of the adjusting carriage.

### Brief description of the drawings

The invention can be better understood and implemented with reference to the attached drawings that illustrate one example by way of non-limiting example.

Figure 1 is a perspective view of a circular saw apparatus of known type.

Figure 2 is a vertical raised view of one example of a sawing unit according to the invention.

Figure 3 is a side view from the left of the sawing unit in figure 2.

Figures 4 and 5 are two views as in figure 2 with the sawing unit in two different operating configurations.

### Detailed description

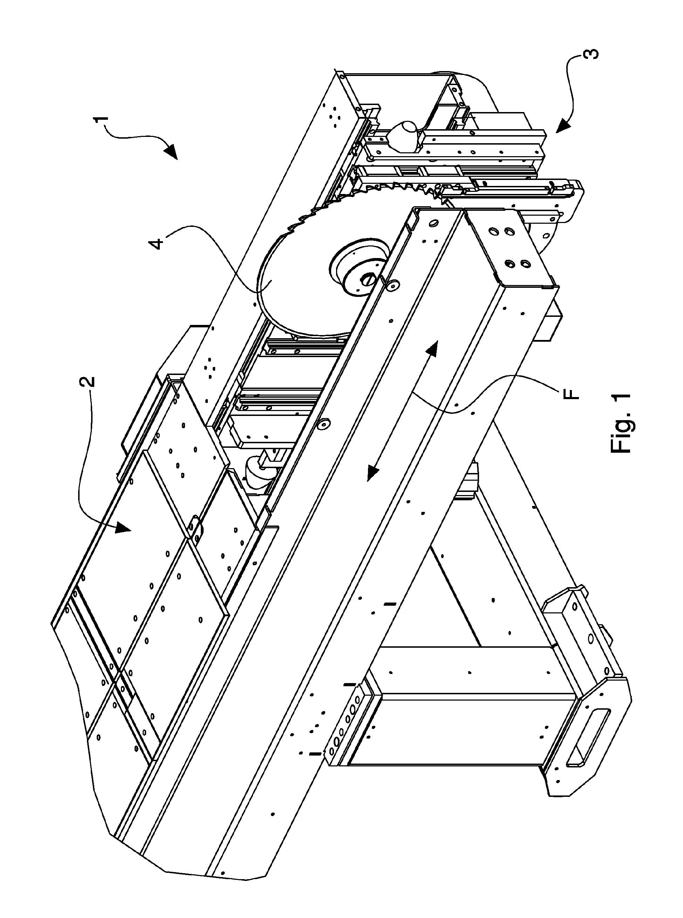

With reference to Figure 1, with 1 a circular saw apparatus of known type has been indicated overall, for machining wooden workpieces or workpieces made of a material equivalent to wood. In particular, the saw apparatus can be used for cutting (sectioning) workpieces into panel shapes.

The saw apparatus comprises a supporting table 2 of the workpiece and a sawing unit 3 that is movable below the supporting table. The sawing unit is movable in one direction F (both ways) that is substantially parallel to the (horizontal) plane defined by the supporting table 2. With the sawing unit 3 at least one circular blade 4 is operationally associated that may traverse the supporting table 2 and the height of which is variable in such a manner as to take the blade below the (horizontal) supporting plane of the workpiece defined by the table 2 in a position of disengagement from the workpiece and/or in such a manner as to change the protrusion of the blade above the aforesaid supporting plane.

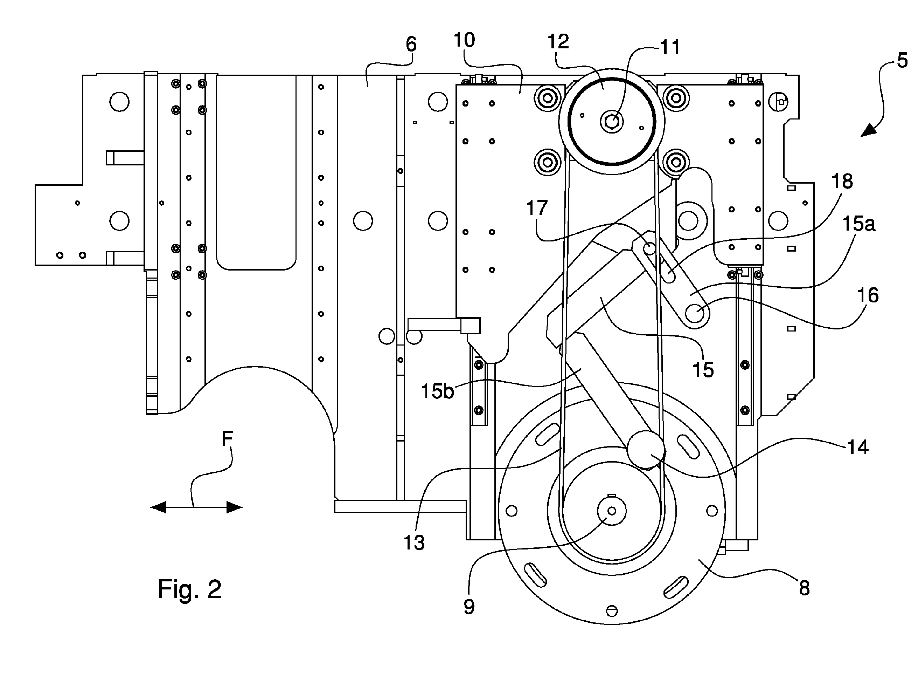

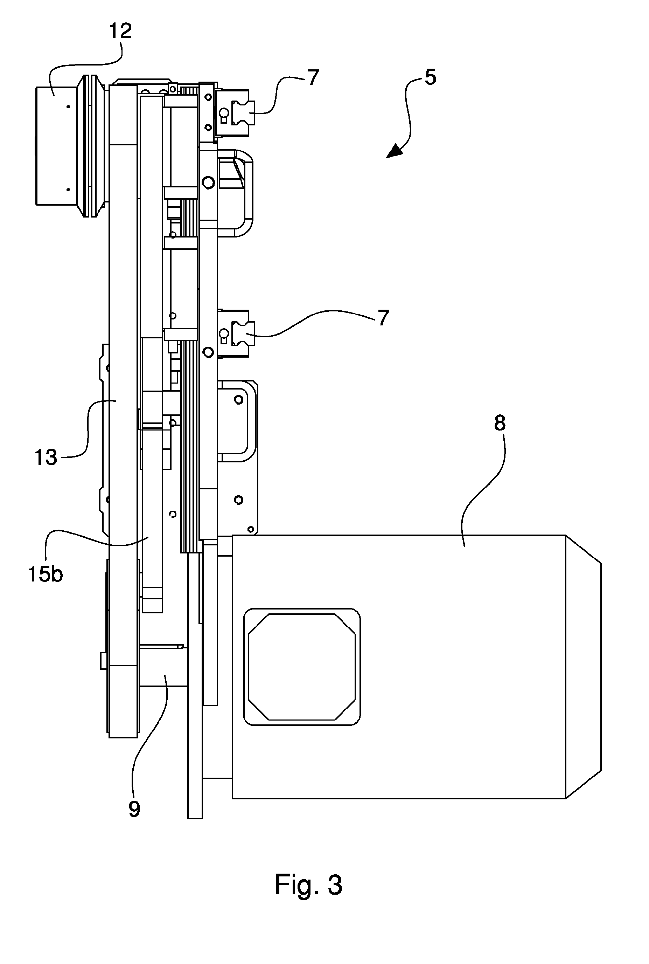

With reference to figures 2 to 5, one example of a sawing unit 5 made according to the present invention is now disclosed. The sawing unit 5 may be applied, for example, to the saw apparatus 1 of figure 1 in replacement of the sawing unit 3 of known type. The sawing unit 5 according to the invention comprises a support 6 coupled with a frame of the saw apparatus 1. The support 6 will be movable on the frame at the command of the driving means. The support 6 may be, in particular, coupled with the frame with the possibility of sliding in the machining direction F parallel to the supporting table 2. The support 6 may be coupled with the frame of the saw apparatus 1 by linear sliding guides 7.

The sawing unit 5 comprises a motor 8 carried by the support 6 for driving a drive shaft 9. The motor 8 may be, in particular, fixed integrally to the support 6. The axis of the drive shaft 9 will in this case be parallel (horizontal) to the plane of the supporting table 2. The axis of the drive shaft 9 may be, in particular, transverse (perpendicular) to the movement direction F of the sawing unit 5.

The sawing unit 5 comprises an adjusting carriage 10 that is raisable and liftable with respect to the support 6. The adjusting carriage 10 may be, as in the specific example, slidably coupled with the support 6. The adjusting carriage 10 will be, in particular, slidable on linear and vertical guiding means. The carriage 10 will be further provided with driving means for moving the carriage on guiding means and thus varying the height position thereof.

The blade (circular saw blade, for example the blade 4 of the saw apparatus 1 of figure 1) will be operationally associated with a blade shaft 11 of the sawing unit 5. The blade shaft 11 is supported by the adjusting carriage. The blade shaft 11 carries a hub 12 to which the blade 4 may be removably applied. Adjusting the height of the blade 4 and/or disengaging the blade 4 below the table 2 are permitted by movements of lowering and/or lifting the adjusting carriage 10.

The blade 4 is supported by the blade shaft 11, which may rotate, being rotatably supported by the adjusting carriage 10. The blade shaft 11 receives the rotation motion from the drive shaft 9.

The sawing unit 5 comprises transmission means (flexible tensile means) for transmitting motion from the drive shaft 9 to the blade shaft 11. Such transmission means may comprise, in particular, at least one endless flexible member 13 guided around the axis of the drive shaft 9 and around the axis of the blade shaft 11 to transmit motion from one to another. Such a flexible member 13 may be, for example, a drive belt wound on two pulleys that are respectively coaxial to the drive shaft 9 and to the blade shaft 11.

The sawing unit 5 further comprises a deflecting element 14 that is movable in relation to the support 6. The deflecting element 14 is arranged for deflecting and keeping tensioned the flexible member 13. The deflecting element 14 can make a (rotary) compensating movement (visible from figures 2, 4 and 5) that compensates a variation in distance between the drive shaft 9 and the blade shaft 11 caused by a (vertical) movement of the adjusting carriage 10.

The deflecting element 14, by performing the compensating movement, is movable both with respect to the support 6 (of rotary movement), and with respect to the adjusting carriage 10.

The sawing unit 5 may further comprise control means arranged for guiding the deflecting element 14 to perform the aforesaid compensating movement. This control means may comprise, as in the specific example disclosed here, an arm 15 pivoted to the support 6 and bearing the deflecting element 14. In particular, the arm 15 (or rocker) comprises a first arm portion 15a that bears an articulation on the support 6 and a second arm portion 15b bearing the deflecting element 14.

The arm 15 may be shaped (for example approximately U-shaped) in such a manner that, a downward rotation of the first arm portion 15a around the articulation 16 is matched by an upward movement of the second arm portion 15b (and of the deflecting element 14) and in such a manner that, vice versa, an upward rotation of the first arm portion 15a matches a downward movement of the second arm portion 15b (and of the deflecting element 14).

The control means may further comprise a mechanism of the cam type having a guiding member (mover) that is integral with the adjusting carriage 10 and a guided member (follower) that is integral with the element or body (arm 15) that supports the deflecting element 14. In the specific case the cam-type mechanism comprises a pin 17 (guiding member) that is integral with the carriage 10 and slidably coupled inside a slot 18 obtained in the element or body (guided member, i.e. in this case the arm 15) that supports the deflecting element 14.

In other examples, which are not illustrated, it is possible to provide a pin (guided member) that is integral with the element or body that supports the deflecting element 14 and is slidably coupled inside a slot obtained in an element or body (guiding member) that is integral with the carriage 10.

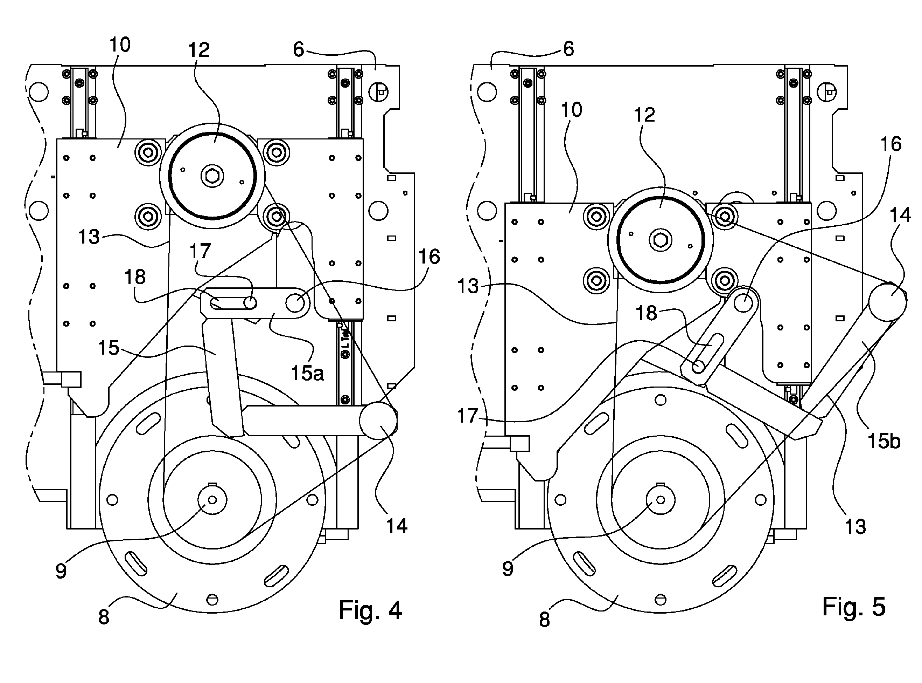

The pin is constrained to perform a relative movement with respect to the slot through the effect of a movement of the adjusting carriage 10 between an upper position (figure 2) of raised blade and a lower position (figure 5) of lowered blade. This reciprocal movement may be an alternating backward and forward movement inside the slot. In the specific case, the pin 17 is carried by the carriage 10, which has a (linear and substantially vertical) translation movement, whilst the slot 18 is carried by the arm 15 (in particular by the first arm portion 15a), which has a rotation movement (with a substantially horizontal rotation axis).

The deflecting element 14 is bound (by rotatable coupling around the articulation 16) to the support 6. The aforesaid compensating movement performed by the deflecting element 14 depends (by the kinematic motion defined by the cam mechanism of the pin-slot type) on the movement of the adjusting carriage 10.

The deflecting element 14 may comprise, for example, a rotatable member (for example a wheel, a pulley or a roller), in particular mounted rotatably idle on the arm 15, on which the endless flexible member 13 may slide, or another member having the function of a belt-guiding pulley for tightening the belt 13.

In use, the height of the blade 4 mounted on the sawing unit 5 may be varied by varying the height of the carriage 10 carrying the blade. The (translation) movement of the carriage 10 (being lowered or lifted) will guide the corresponding (rotational) movement of the deflecting element 14 (being respectively lowered or lifted) in such a manner that the flexible member 13 is maintained in constant tension. Each position of the carriage will in fact be matched by a position of the deflecting element 14, according to the law of motion imposed by the guide mechanism (for example of the type with a pin that is slidable inside a slot) operating between the carriage 10 and the deflecting element 14. The motor 8 may thus remain stationary in relation to the support 6, whilst the carriage 10 performs a lowering or lifting movement and the deflecting element 14 performs a compensating movement in which it moves both in respect to the carriage 10 and in respect to the support 6, so as to maintain the motion transmission flexible member 13 tensioned.

In the example disclosed above the transmission means for transmitting motion from the drive shaft to the blade shaft comprises a single endless flexible member. It is possible to provide another example, which is not illustrated, which differs from the one disclosed above by the fact that the transmission means for transmitting motion comprises (instead of a single transmission) a double flexible member transmission. In this case the transmission means will comprise an intermediate driven shaft supported rotatably by the support 6 (like the drive shaft) and two endless flexible members, one guided around the drive shaft and around the intermediate driven shaft and the other (on which the deflecting element will act) guided around the intermediate driven shaft and around the blade shaft.

In the example illustrated above the control means comprises a mechanical control system (for example with a cam mechanism) that controls the (rotational) compensating movement of the deflecting element (carried by a rocker that may rotate) according to the (lowering and lifting) movement of the adjusting carriage. It is possible to provide, in an example that is not illustrated, in replacement of or in addition to the mechanical slave system, an electronic control system (for example by a programmable processor) that controls driving means of the (for example rotary) compensating movement of the deflecting element according to the (lowering and lifting) movement of the adjusting carriage. The driving means (for example an actuator) of the compensating movement of the deflecting element will be distinct from the driving means of the adjusting carriage.

## Claims

1. Sawing unit (5) comprising:
- a support (6);
- a drive shaft (9) carried by said support (6);
- a motor (8) carried by said support (6) for driving said drive shaft (9);
- an adjusting carriage (10) that is raisable and lowerable in relation to said support (6);
- a blade shaft (11) carried by said adjusting carriage (10);
- a blade (4) that is rotated by said blade shaft (11) and the height of which is variable through the effect of the movements of said adjusting carriage;
- transmission means for transmitting motion from said drive shaft (9) to said blade shaft (11), said transmission means comprising at least one endless flexible member (13);
- a deflecting element (14) that is able to perform a compensating movement in which it is movable with respect to said support (6) to deflect and keep tensioned said flexible member (13) during the movement of said adjusting carriage (10);
**characterised in that**, in said compensating movement, said deflecting element (14) is movable with respect to said adjusting carriage (10).

2. Sawing unit according to claim 1, comprising control means for guiding said deflecting element (14) in said compensating movement.

3. Sawing unit according to claim 2, wherein said control means comprises an arm (15) pivoted to said support (6), said arm (15) having said deflecting element (14).

4. Sawing unit according to claim 3, wherein said arm comprises a first arm portion (15a) with an articulation (16) on said support (6) and a second arm portion (15b) having said deflecting element (14), said arm (15) being shaped in such a manner that a downward rotation of said first arm portion (15a) around said articulation (16) corresponds to an upward movement of said second arm portion (15b) and in such a manner that on the other hand an upward movement of said first portion (15a) corresponds to a downward movement of said second portion (15b).

5. Sawing unit according to any one of claims 2 to 4, wherein said control means comprises a cam mechanism having a guiding member that is associated with said adjusting carriage (10) and a guided member that is associated with said deflecting element (14).

6. Sawing unit according to claim 5, wherein said cam mechanism comprises a pin (17) working as guiding member or guided member, said pin (17) being slidably coupled inside a slot (18) working, respectively, as guided member or guiding member.

7. Sawing unit according to claim 6, wherein said pin (17) is constrained to perform an alternating outward and return movement inside said slot (18) through the effect of a movement of said adjusting carriage (10) between an upper raised blade position and a lower lowered blade position.

8. Sawing unit according to any preceding claim, wherein said deflecting element (14) is constrained on said support (6) and wherein the compensating movement of said deflecting element depends on the movement of said adjusting carriage (10).

9. Sawing unit according to any preceding claim, wherein said deflecting element (14) comprises a rotatable member, for example a roller or a pulley, slidably coupled with said endless flexible member (13).

10. Sawing unit according to any preceding claim, wherein said endless flexible member (13) is guided around said blade shaft (11) and around said drive shaft (9) or an intermediate shaft driven by said drive shaft.

11. Saw apparatus comprising a supporting table of a workpiece and a sawing unit that is movable below said supporting table, said sawing unit having a circular blade that traverses said supporting table and the height of which is variable, **characterised in that** said sawing unit is made according to any one of claims 1 to 10.
